# EUROPEAN PATENT APPLICATION

(11) **EP 4 793 686 A1**
(43) Date of publication of application: **19.08.2026**
(21) Application number: 25157330.9
(22) Date of filing: 12.02.2025
(51) Int. Cl.: G02B 26/10

(54) **AN OPTICAL SYSTEM AND METHOD FOR ANGULAR SCANNING**

(71) Applicant: European Space Agency, 2200 AG Noordwijk (NL)
(72) Inventor: Maresi, Luca, 2242 CB Wassenaar (NL); Agócs, Tibor, 2200 Noordwijk (NL); Sandri, Paolo, 82234 Weßling, Oberpfaffenhofen (DE); Erhard, Markus Wilhelm, 81735 München (DE)
(74) Representative: Plougmann Vingtoft a/s

(57) **Abstract**

The invention provides an optical system 1 and a method for angular scanning of incident light. The optical system is comprising an optical sensor 12, a first displaceable optical component 14 capable of reflecting or refracting light, and a second displaceable optical component 16 capable of reflecting or refracting light.

The first displaceable optical component and the second displaceable optical component are relatively translationally displaceable parallel to each other by one, or more, actuator(s) 22, such that the incident light 10 is deflected to form deflected light 11 in accordance with the translational displacement of the displaceable optical components 14, 16, and the optical sensor is arranged to record the deflected light from multiple translational displacement positions 35 of the first and the second displaceable optical component.

## Description

### FIELD OF THE INVENTION

The present invention relates to an optical system and method for angular scanning of incident light.

### BACKGROUND OF THE INVENTION

Optical systems for angular scanning of incident light are widely used in various applications, including imaging, sensing, and communication technologies.

Traditional methods for achieving angular scanning often involve the use of rotating mirrors. These systems, while effective, have certain limitations.

One significant drawback of rotating mirror systems is the increased cross-sectional area in the direction perpendicular to the motion of the components. This larger footprint can be a disadvantage in applications where space is constrained or where a more compact design is desirable. For instance, in satellite systems, where space and weight are critical factors, a more compact optical system can significantly enhance the overall efficiency and functionality of the satellite.

Additionally, rotating mirror systems typically lack the ability to compensate for optical aberrations. Optical aberrations can degrade the quality of the scanned light, leading to less accurate or lower quality results. The inability to adjust for these aberrations can limit the performance and versatility of the optical system.

There is a need for an improved optical system that can provide angular scanning of incident light while addressing the limitations associated with rotating mirror systems. Such a system would ideally offer a more compact design and the capability to compensate for optical aberrations, thereby enhancing the overall performance and applicability of the optical system.

Hence, an improved system and method for angular scanning would be advantageous, and in particular a more efficient, compact, and/or reliable system and method would be advantageous.

### OBJECT OF THE INVENTION

It is an object of the present invention to provide an optical system and a method for applying the optical system that is more compact than when using rotational mirrors.

It is a further object of the present invention to provide an alternative to the prior art.

In particular, it may be seen as an object of the present invention to provide an optical system and method that solves the above-mentioned problems of the prior art.

### SUMMARY OF THE INVENTION

Thus, the above described object and several other objects are intended to be obtained in a first aspect of the invention by providing an optical system for angular scanning of incident light, comprising:
- an optical sensor,
- a first displaceable optical component capable of reflecting or refracting light, and
- a second displaceable optical component capable of reflecting or refracting light;
   wherein
- the first displaceable optical component and the second displaceable optical component are relatively translationally displaceable parallel to each other by one, or more, actuator(s), such that the incident light is deflected to form deflected light in accordance with the translational displacement of the displaceable optical components, and
- the optical sensor is arranged to record the deflected light from multiple translational displacement positions of the first and the second displaceable optical component.

The invention lies in the technical field of optics, where it offers the possibility to achieve a unique function, angular scanning of the line of sight by translating optical components with respect to each other.

The optical components may be either refractive or reflective and they may comprise conventional optical surfaces or meta-surfaces based on subwavelength features.

Deflected light is light that has been reflected or refracted by the first displaceable optical component and/or the second displaceable optical component.

Angular scanning refers to the process of systematically changing the incoming angle of incidence of a light beam relative to a reference axis. This is typically achieved by using one or more optical components, such as mirrors or lenses, which can be moved or adjusted to alter the direction of the incoming light. The purpose of angular scanning is to direct the light beam ay different positions or angles, allowing for the measurement or imaging of various points within a field of view. This technique is commonly used in optical systems for applications such as imaging, sensing, and communication.

The reference axis is the line, which coincides with the optical axis, when the first and second optical component is in neutral position where there is no translational displacement between the displaceable optical components. This can also be understood as the translational displacement position of the first and second displaceable optical component when the incoming light is coming from the defined neutral direction. The optical axis is the centre line of the incoming light bundle, which also passes through the centre of the optical sensor.

The first and second displaceable optical components are in neutral position, when there is a plane-symmetry in the system. The line corresponding to the neutral direction is in this plane of the symmetry.

That there is no translational displacement between the displaceable optical components is to be understood as the first and second optical component both are placed in a central position.

The incoming angle of the incident light relative to a reference axis depends on the relatively translationally displacement parallel to each other of the first displaceable optical component and the second displaceable optical component.

The total field of view is the area that can be scanned by the optical system from a given translational displacement position of the first displaceable optical component and the second displaceable optical component within the optical system. The instantaneous field of view is the area that is imaged onto the detector at any given point.

The invention is an optical system for angular scanning of incident light. The optical system comprises two translating optical components to achieve angular scanning functionality, while maintaining the optical performance.

The invention uses a translating motion as opposed to a rotation to achieve the angular scanning. By having translating components, various achievements can be realized, such as reduced cross-section along certain directions. This is especially true for translating components which contain metamaterials or metasurfaces, by which the geometry of the component can be further optimized, e.g., resulting in flat optics.

Furthermore, the translating components have additional surface areas to implement additional optical functionalities, e.g., to compensate for optical aberrations. Translating motion also offers the possibility to use different mechanisms, which may be an advantage in certain cases.

The invention can be used in various applications, where there is a need to change the line of sight, and it is more beneficial to use translating components instead of rotating mirrors.

The invention provides a novel optical architecture, which can bring various benefits, e.g., in terms of volume / cross section of the volume at subsystem level. It can also lead to performance improvement and cost decrease at system level.

The system comprises an optical sensor and two displaceable optical components, each capable of reflecting or refracting light. These components are arranged to be translationally displaceable parallel to each other by one or more actuators.

This configuration allows the incident light to be deflected in accordance with the translational displacement of the optical components. Thereby the incoming angle of the incident light depends on the translationally displacement of the first displaceable optical component and the second displaceable optical component relative to each other.

The optical sensor is a device that records the deflected light. It is positioned to record the deflected light from various translational displacement positions of the first and second displaceable optical components. The optical sensor is set up to measure and record the characteristics of the deflected light, such as its intensity, angle, or wavelength. That the optical sensor records the deflected light is to be understood as it detects and measures the deflected light as recorded data.

In each different translational displacement position of the first and second displaceable optical components the incoming angle of the incident light is different.

The recorded data is then transmitted to a controller or processing unit, which analyses the light patterns and provides feedback or further processing as required. The recorded data may be used to generate images.

The controller or processing unit may store the recorded data in a database or transmit the recorded data to an external receiver.

"Translationally displaceable parallel to each other" is to be understood as that the two optical components can move in a straight line relative to each other, maintaining their parallel orientation throughout the displacement.

Overall, the concept provides the ability to tailor optical designs to specific needs, enhancing performance and functionality in various applications.

According to an embodiment, the first and/or the second displaceable optical components deflect the incident light, such that the incident light comprises an incoming angle relative to the displaceable optical components in accordance with the translational displacement between the displaceable optical components.

This embodiment allows for precise control of the incoming angle at which the incident light is deflected, further enhancing the accuracy and functionality of the optical scanning system.

Specifically, the translational displacement between the displaceable optical components determines the incoming angle of the incident light relative to the optical components. By adjusting the relative translational displacement positions of the displaceable optical components, the system can control the direction from which the incident light is received and subsequently recorded by the optical sensor.

Hereby, the translational displacement between the displaceable optical components determines the incoming angle of the incident light relative to the optical components, thereby determining the direction from which the incident light to be recorded is coming.

The incoming angle of the incident light is the angle between the incident light and the reference axis.

This precise control over the angle and direction of the incident light allows the optical system to accurately capture and analyze light from various directions, improving the overall performance and versatility of the optical scanning system.

According to an embodiment, the optical system is arranged to record deflected light of incident light comprising different incoming angles by displacing the first and/or the second displaceable optical components into translational displacement positions with different translational displacement of the displaceable optical components.

By adjusting the translational displacement positions of the displaceable optical components, the system can capture, and record light deflected from multiple angles, enhancing its ability to analyse light from diverse directions. This capability allows for a more comprehensive and versatile optical scanning system, capable of accurately recording and processing light from a wide range of incoming angles.

According to an embodiment, the incident light first is reflected or refracted by the first displaceable optical component and then reflected or refracted by the second displaceable optical component before moving towards the optical sensor as deflected light.

The optical system is designed such that the incident light first interacts with the first displaceable optical component, where it is either reflected or refracted. Subsequently, the light is directed to the second displaceable optical component, where it undergoes a second reflection or refraction. This sequential interaction with both optical components ensures that the light is accurately deflected before it moves towards the optical sensor as deflected light. This arrangement allows for enhanced control over the light path and improves the precision of the light deflection process, thereby optimizing the performance of the optical scanning system.

According to an embodiment, the first and/or the second displaceable optical components are lenses, mirrors, meta-material components or meta-surface components.

Meta-material components are artificially structured materials designed to control and manipulate physical phenomena such as light, sound, and electromagnetic waves in ways that are not possible with natural materials. These materials derive their unique properties from their engineered structures rather than their base materials.

Meta-surface components, on the other hand, are the two-dimensional counterparts of meta-materials. They consist of sub-wavelength-scale patterns that modulate electromagnetic waves through specific boundary conditions rather than bulk material properties.

This embodiment allows for a versatile and adaptable optical system capable of utilizing advanced materials to achieve precise control over light deflection and enhance the system's overall performance.

According to an embodiment, the first and/or the second displaceable optical components are refractive or reflective.

Refractive components alter the direction of light as it passes through them, bending the light path based on the material's refractive index. Reflective components, on the other hand, change the direction of light by bouncing it off their surfaces.

This embodiment provides flexibility in the design and functionality of the optical system, allowing it to utilize either refractive or reflective properties to achieve the desired light deflection and enhance the system's performance.

According to an embodiment, the optical system further comprises a focusing optical component, preferably a mirror, to focus the deflected light from the first and/or the second displaceable optical components towards the optical sensor.

This focusing optical component ensures that the deflected light is accurately directed onto the optical sensor, enhancing the precision and efficiency of the light detection process.

The first and second displaceable components can also focus the light, so it is not strictly necessary to have another focusing component even though it is a possibility.

The concept can be used so that the two displaceable components are deflecting the light only, meaning maintaining the beam collimated. Or they can also be used so that the light beam afterwards is converging to be focused.

According to an embodiment, the incident light is collimated light.

Collimated light consists of light rays that are parallel to each other, resulting in a beam that does not spread out as it propagates.

According to an embodiment, the deflected light is collimated light.

As explained above, the deflected light is not necessarily collimated. The displaceable components can be powered so that they result in convergence or divergence of the light bundle.

According to an embodiment, the one, or more, actuators for translational displacing the first and/or the second displaceable optical components are linear actuators, piezoelectric actuators, or voice coil motors.

Linear actuators provide precise linear motion, making them ideal for applications requiring accurate positioning. Piezoelectric actuators utilize the piezoelectric effect to create small, precise movements, offering high resolution and rapid response times. Voice coil motors generate motion through electromagnetic forces, providing smooth and accurate displacement.

The use of these types of actuators ensures precise control over the translational displacement of the optical components.

In a second aspect, the invention relates to a satellite comprising the optical system according to the first aspect of the invention.

Integrating this advanced optical system into a satellite allows for precise angular scanning and recording of incident light from various directions in space. This capability is particularly beneficial for applications such as Earth observation, astronomical studies, and space exploration, where accurate light detection and analysis are crucial. The inclusion of the optical system enhances the satellite's functionality, providing it with the ability to perform detailed and accurate optical measurements in its operational environment.

In a third aspect, the invention relates to a method for angular scanning of incident light using an optical system, the method comprising:
- providing an optical system comprising an optical sensor, a first displaceable optical component capable of reflecting or refracting light and a second displaceable optical component capable of reflecting or refracting light;
- translationally displacing the first and/or the second displaceable optical component parallel to each other to deflect the incident light and form deflected light;
- recording the deflected light at the optical sensor at multiple translational displacement positions of the at least two displaceable optical components; and
- combining the recordings obtained at multiple translational displacement positions to form a combined output.

This method enables precise angular scanning and recording of light, enhancing the accuracy and functionality of the optical system.

This is a method by which angular scanning can be created by a novel way using translating optical components. The method uses two translating optical components to achieve angular scanning functionality, while maintaining the optical performance.

At least two displaceable optical components are placed in multiple translational displacement positions, in each multiple translational displacement position the optical sensor records the deflected light to create an output or recording. The output's or recordings from different translational displacement positions may comprise an image for each multiple translational position. The output or recording for each multiple translational position is combined to form a combined output, which may be is a scan of an area, possibly an image covering the scanned area.

The first and/or second displaceable optical components can be moved between different translational displacement positions. These translational displacement positions are used to alter the path of the incident light, and the optical sensor records the deflected light at each of these positions.

According to an embodiment, recording the deflected light at the optical sensor at multiple translational displacement positions of the first and/or the second displaceable optical components, comprises scanning along a field of view.

As the optical components are translationally displaced, the system scans across a broader area, capturing light from different angles and positions within the field of view. This scanning capability allows the optical system to gather comprehensive data over a wide area, enhancing its ability to analyse and interpret the light patterns accurately. This embodiment further improves the versatility and effectiveness of the optical scanning system.

According to an embodiment, the optical system is mounted on a satellite in orbit, and the recording of the deflected light by the optical sensor at multiple translational displacement positions of the first and/or the second displaceable optical component comprises recording the same spot on the Earth's surface from different angles as the satellite moves in its orbit.

This allows the system to gather comprehensive and multi-angular data of specific locations on Earth, enhancing the accuracy and depth of the recorded information. By observing the same area from various perspectives, the system can provide more detailed and reliable data for applications such as Earth observation, environmental monitoring, and resource management.

The first, second and third aspect of the present invention may each be combined with any of the other aspects. These and other aspects of the invention will be apparent from and elucidated with reference to the embodiments described hereinafter.

### BRIEF DESCRIPTION OF THE FIGURES

The system and method according to the invention will now be described in more detail with regard to the accompanying figures. The figures show one way of implementing the present invention and are not to be construed as being limiting to other possible embodiments falling within the scope of the attached claim set.

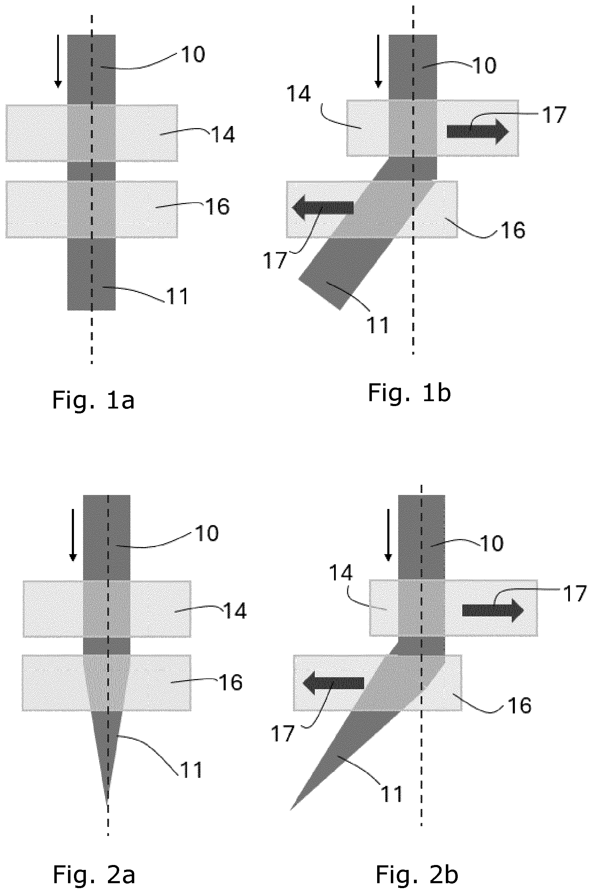

Fig. 1a, 1b, 2a and 2b schematic illustration of the principle of the invention.
Fig. 1a shows a light beam of incident light passing through the first optical component and the second optical component without being deflected.
Fig. 1b shows a light beam of incident light being deflected when passing through the first optical component and the second optical component.
Fig. 2a shows a light beam of incident light passing through the first optical component and the second optical component without being deflected but being focused.
Fig. 2b shows a light beam of incident light being deflected and focused when passing through the first optical component and the second optical component.
Fig. 3a illustrates an optical system where the incident light is reflected by the first optical component and the second optical component, which are in neutral positions not being translationally displaced.
Fig. 3b illustrates an optical system where the incident light is reflected by the first optical component and the second optical component, which are translationally displaced.
Fig. 3c illustrates an optical system where the incident light is reflected by the first optical component and the second optical component, which are displaced in a direction perpendicular to the incident light beam.
Fig. 4 illustrates incident light coming from seven different positions. The first and second displaceable optical components are displaced in seven different translational displacement positions. Fig. 4 illustrates seven different set-ups with seven different translational displacement positions merged in the same figure. In fig. 4 the incoming light is being focused.
Fig. 5 illustrates another possible design implementation of the optical system. Fig. 5 shows seven different set-ups merged in the same figure with the mirrors 14, 16 in different parallel displacements. In fig. 5 the incoming light is being focused.
Fig 6 illustrates a design, where two translating mirrors, which is the first optical component 14 and the second optical component 16, are used to change the direction of the incident light 10 to come from different positions 40. Also, on Fig. 6, seven different set-ups are merged in the same figure. In fig. 6 the light is kept collimated.
Fig. 7 illustrates the same as fig. 6 seen from another plane.
Fig. 8 illustrates the same as fig. 6 and 7 again from a different plane.
Fig. 9 illustrates that the optical system may be mounted on a satellite.
Fig. 10 illustrates that when the satellite may be moving through space, the optical system may be adjusted such that the optical system is receiving incident light 10 from the same position on Earth.
Fig. 11 illustrates that recorded deflected light from different positions may be recorded making it possible to scan a large area.
Fig. 12 illustrates that when deflected light from the same position is recorded from different angles, the recorded data or images can be used to create a detailed image of a specific position.
Fig. 13 is a flow chart illustrating the method for angular scanning of incident light using an optical system.

### DETAILED DESCRIPTION OF AN EMBODIMENT

A schematic illustration of the principle is shown in fig. 1a, 1b, 2a and 2b.

Fig. 1a shows a light beam of incident light 10, which is collimated light, passing through the first optical component 14 and the second optical component 16. As the two optical components are centered and not displaced relative to each other the light is not reflected or deflected but passes straight through the optical components 14, 16, which in this case may be lenses, and leaves as collimated deflected light 11.

The translation of the two optical components can be applied in the same direction or in the opposite direction to achieve the required functionality. The components can be refractive, reflective, or be made of metamaterials and meta-surfaces.

Fig. 1b shows a light beam of incident light 10, which is collimated light, passing through the two optical components 14, 16. Now the two optical components are relatively translational displaced to each other, illustrated by arrows 17, and therefore the incident light is deflected and leaves as collimated deflected light 11 in another direction than the incident light deflected by an angle relative to the incident light.

In fig. 2a a light beam of incident light 10, which is collimated light, passes through the first optical component 14 and the second optical component 16. As the two optical components are centered and not displaced relative to each other the light is not reflected or deflected but passes straight through the optical components 14, 16. The optical components may in this case may be lenses. However, the incident light is focused by at least one of the optical components and therefore leaves as a focused deflected light 11.

In Fig. 2b a light beam of incident light 10, which is collimated light, passes through the two optical components 14, 16. The two optical components are relatively translational displaced to each other, illustrated by arrows 17, and therefore the incident light is deflected. Further, the incident light is focused by at least one of the optical components and therefore leaves as a focused deflected light 11 in another direction than the incident light is moving, deflected by an angle relative to the incident light.

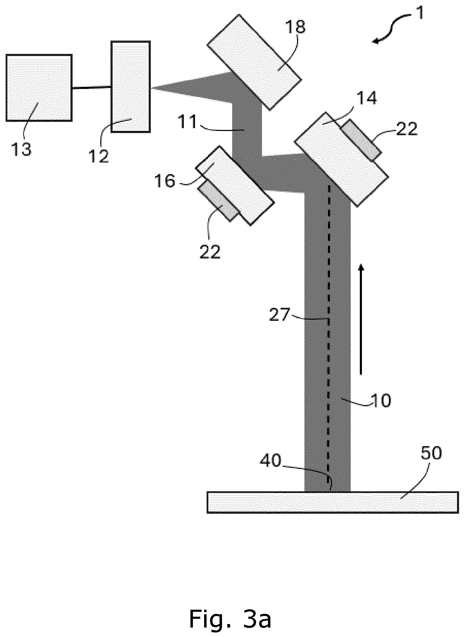

Fig. 3a shows an optical system 1 with an optical sensor 12, a first displaceable optical component 14, which in this case is a mirror reflecting the incident light 10, a second displaceable optical component 16, which in this case is a mirror reflecting the light, and a focusing optical component 18 focusing the deflected light beam 11 to be recorded by the optical sensor 12. The optical sensor is connected to processing unit 13, that processes and stores the recorded data. The recorded data may be used to generate images. The controller or processing unit may store the recorded data in a database or transmit the recorded data to an external receiver.

The first displaceable optical component 14 and the second displaceable optical component 16 are translationally displaceable relative to each other by actuators 22.

In fig. 3a the reference axis 27 is illustrated by the dashed line.

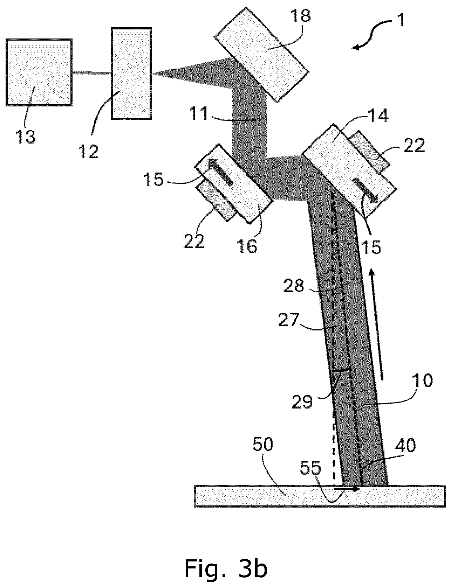

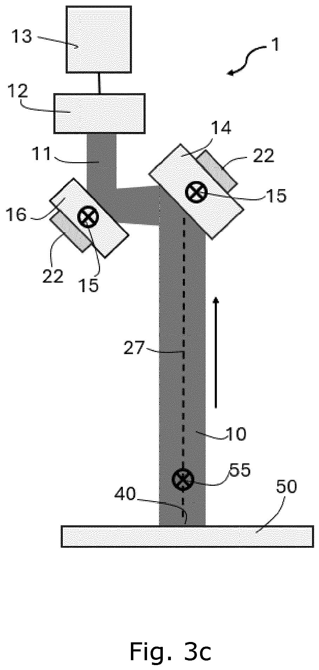

The incident light origins from object 50, which may be the planet Earth, and the optical system 1 may be mounted on a satellite. In fig. 3 the first displaceable optical component 14 and the second displaceable optical component 16 are placed in a neutral position, where it reflects the light coming directly from a defined neutral direction. The neutral position is where there is no translational displacement between the displaceable optical components. The displaceable optical components may be in neutral position when the actuators are not exercising any force to the displaceable optical components.

In fig. 3b the first displaceable optical component 14 and the second displaceable optical component 16 are displaced relative to the situation in fig. 3a by the actuators 22 illustrated by arrows 15. The displaceable optical components are in fig. 3b displaced in a direction linear to the incoming light beam. Therefore, incident light 10 is now coming from another position of the object 50, illustrated by the arrow 55.

In fig. 3b the incoming axis 28, illustrated by the dashed line 28, follows the direction of movement of the incident light, while the reference axis 27 is illustrated by the dashed line 27. The angle between the reference axis 27 and the incoming axis 28 is the incoming angle 29.

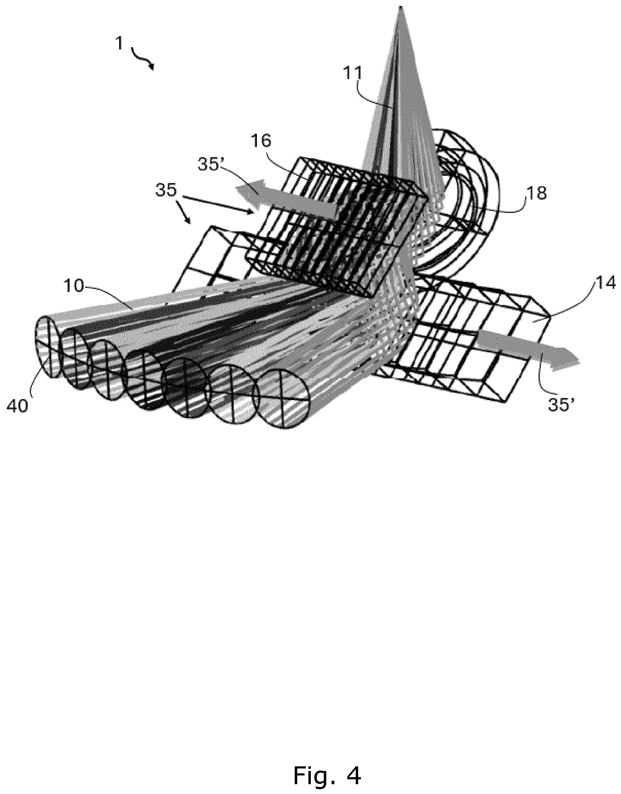

Fig. 3c illustrates an optical system 1 with an optical sensor 12, a first displaceable optical component 14, which is a mirror reflecting the incident light 10, a second displaceable optical component 16, which in this case is a mirror reflecting the light. In this case the displaceable optical components are displaced in a direction perpendicular to the incoming light beam. Illustrated by the arrow symbol 15 going into the plane. When displacing the displaceable optical component 14, 16 also the incident light beams come from another area of the object 50, illustrated by the arrow symbol 55, indication that the incident beam 10 is coming from another position 40 of the object, as can be clearly seen in fig. 4.

Fig. 4 illustrates incident light 10 coming from seven different positions 40. The first displaceable optical component 14, which in this case is a mirror, is displaced in seven different translational displacement positions 35, so fig. 4 shows seven different set-ups merging in the same figure, with the first displaceable optical component 14 and the second displaceable optical component 16 positioned in seven different translational displacement positions 35 of different parallel displacements causing the incident light 10 to come from seven different positions 40 depending on the translational displacement positions 35 of the first displaceable optical component 14 and the second displaceable optical component 16, illustrated by the arrows 35'. The displaceable optical components are displaced in a direction perpendicular to the incoming light beam like in fig. 3c.

By translating the two mirrors optical components 14, 16 a scanning function is achieved for 40 degrees. The focusing mirror 18 creates a scanning imaging system that can be used in a payload on CubeSats. The design can be further optimized to create different scanning angles, instantaneous field of view and focal-ratio. The optical system 1 illustrated in fig. 4 comprises a 100 mm entrance pupil, a scanning field of view of 40 degrees and an F-ratio of 4.

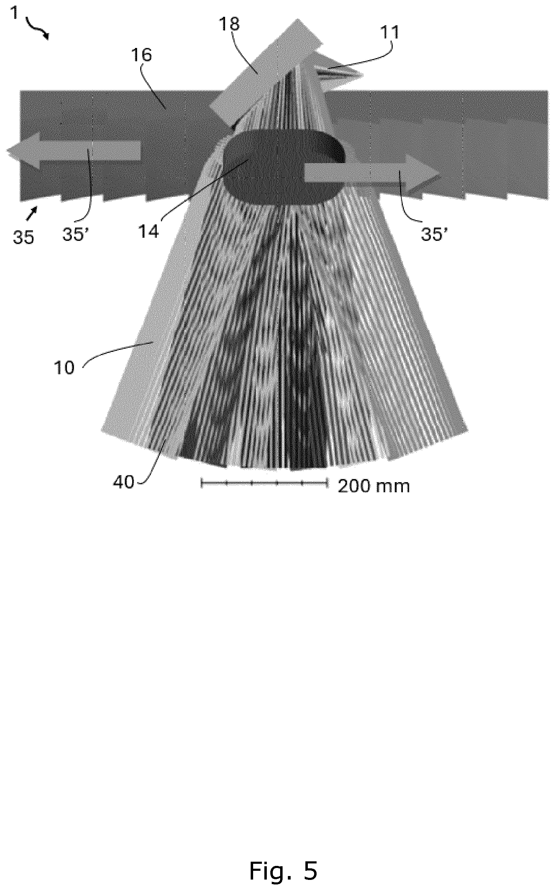

Fig. 5 illustrates another possible design implementation of the optical system 1. Again, like fig 4, fig. 5 shows seven different set-ups of the first displaceable optical component 14 and second displaceable optical component 16 merged in the same figure with mirrors in different parallel translational displacement positions 35, also illustrated by the two arrows 35'. In this embodiment the deflected light 11 is focused by the focusing optical component 18.

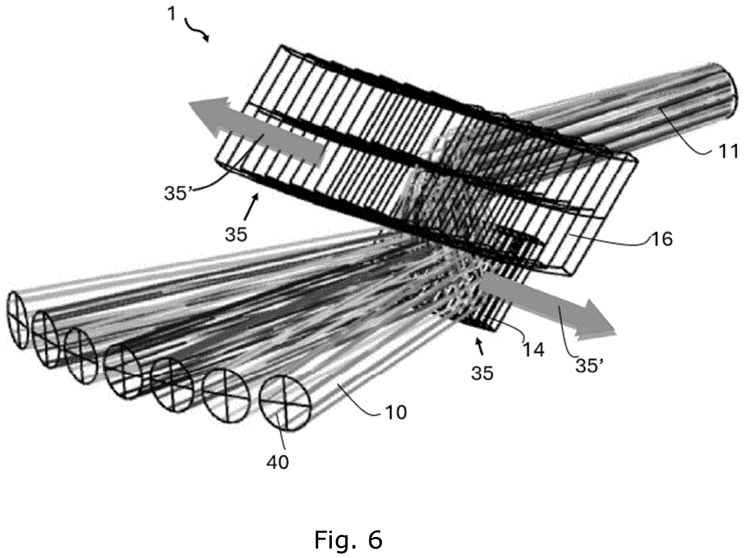

In Fig 6 an afocal design is shown, where two translating mirrors, which is the first optical component 14 and the second optical component 16, are used to change the direction of the incident light 10 to come from different positions 40. Also, on Fig. 6, seven different set-ups with the first optical component 14 and the second optical component 16 in seven different translational displacement positions 35, also illustrated by the two arrows 35', are merged in the same figure.

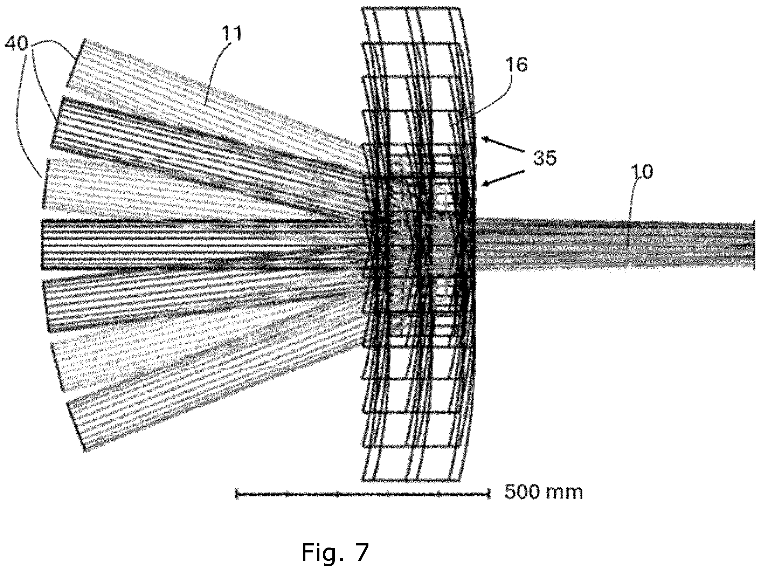

Fig. 7 illustrates the same as fig. 6 seen from another plane. Herein the first optical component 14 is behind the second optical component 16. The first optical component and the second optical component are shown displaced in seven different translational displacement positions 35 merged in Fig. 7.

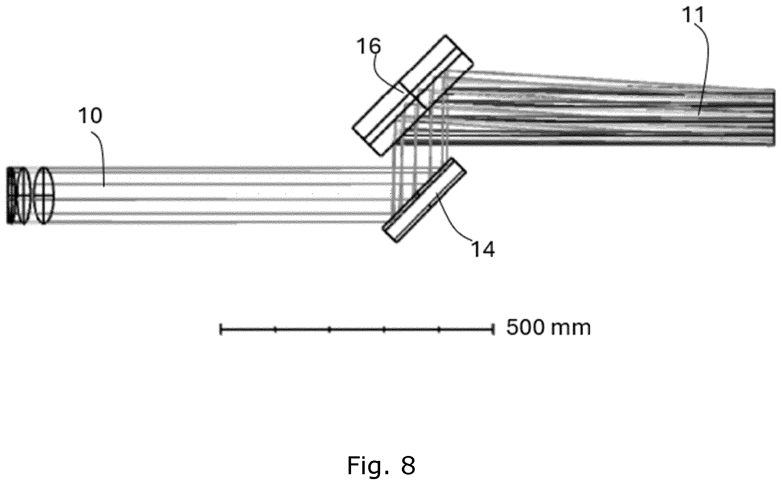

Fig. 8 illustrates the same as fig. 6 and 7 again seen from a different plane.

The concept has been explored through various optical designs including refractive and reflective components. Various potential products have been modelled in dedicated optical design software.

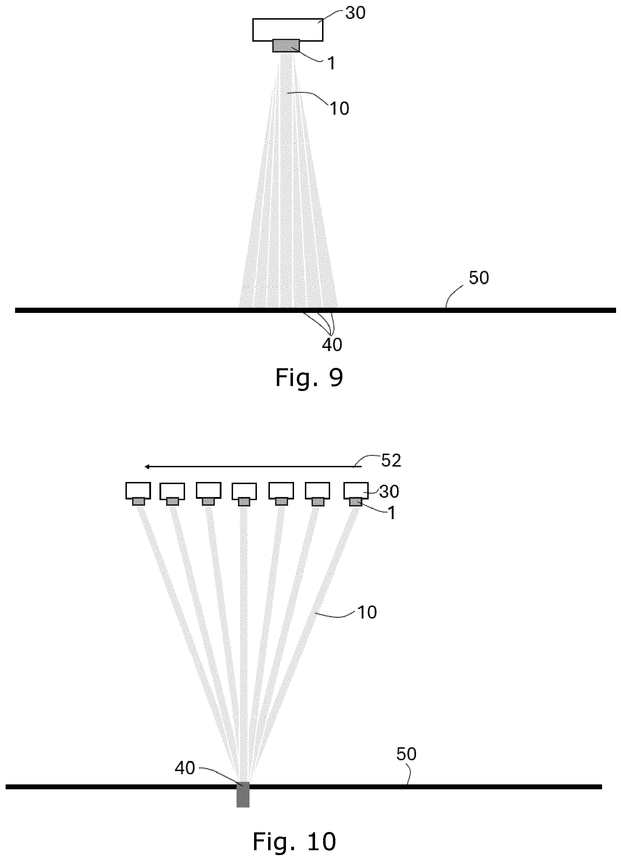

Fig. 9 illustrates that optical system 1 may be mounted on a satellite 30. The optical system is set up with the first displaceable optical component and the second displaceable optical component in different parallel translational displacement positions relative to each other receiving incident light 10 from seven different positions 40 at the object 50, which may be the surface of the planet earth, depending on the parallel translational displacement positions of the first and second displaceable optical components.

Fig. 10 illustrates that when the satellite 30 may be moving through space in the direction illustrated by the arrow 52, the optical system 1 may be adjusted such that the first displaceable optical component and the second displaceable optical component may be set-up with different parallel translational displacement positions relative to each other, such that when the satellite is moving the parallel translational displacement positions of the first displaceable optical component and the second displaceable optical may be adjusted so that the optical system 1 are receiving incident light 10 from the same position 40 on Earth so that incident light from same position is recorded from different angles. The incident light recorded from different angles of the same position can be combined to an image of the position 40 with great detail.

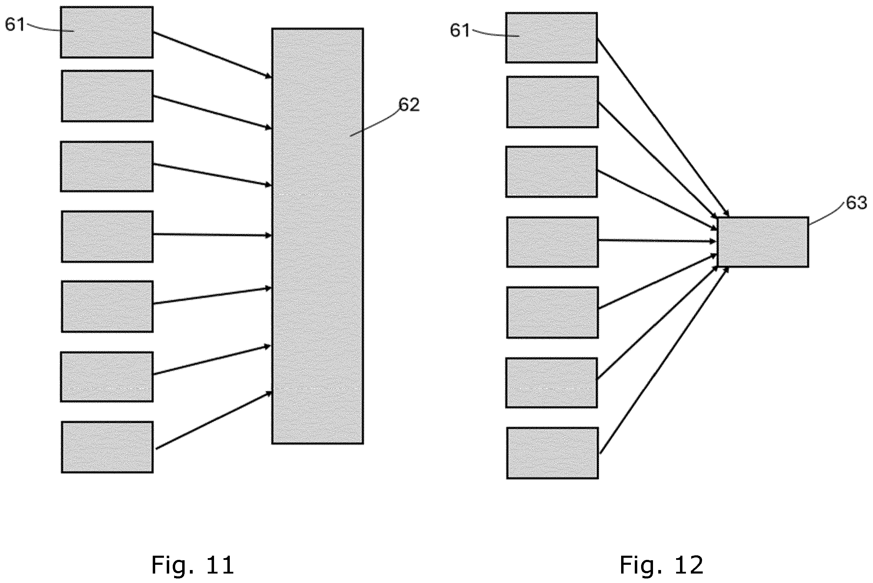

Fig. 11 illustrates that recorded deflected light 11 from different positions 40, see fig. 9, may be recorded making it possible to scan a large area. The scans may be recorded as images or recordings 61, which may then be merged together in an extended image or combined output 62 covering the large area.

Fig. 12 illustrates that when deflected light from the same position 40 is recorded by the optical system 1 from different angle as images or recordings 61, see fig. 10, the recorded data or images can be used to create a detailed image or combined output 63 of the position 40.

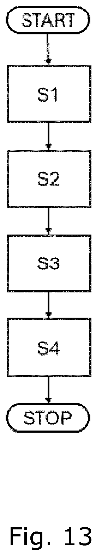

Fig. 13 is a flow chart illustrating the method for angular scanning of incident light using an optical system. The method is providing S1 an optical system comprising an optical sensor 12, a first displaceable optical component 14 capable of reflecting or refracting light and a second displaceable optical component 16 capable of reflecting or refracting light. Translationally displacing S2 the first and/or the second displaceable optical component 14, 16 parallel to each other to deflect the incident light 10 and form deflected light 11. Recording S3 the deflected light 11 at the optical sensor at multiple translational displacement positions of the at least two displaceable optical components 14, 16. Combining S4 the recordings obtained at multiple translational displacement positions to form a combined output 62, 63.

The concept of the invention is a novel way of achieving angular scanning. The invention uses a translating motion as opposed to a rotation to achieve the angular scanning. By having translating components, like lenses, mirrors, meta-material or meta-surfaces based components, various achievements can be realized, such as reduced cross-section along certain directions. Furthermore, the translating components have an additional surface area to implement further optical functionalities, e.g., to compensate for optical aberrations. Translating motion also offers the possibility to use different mechanisms, which may be an advantage in certain cases. The concept can lead to optical designs with different geometries, F-ratios, and angular scan range.

The traditional way of implementing scanning function is through the rotation of a fold mirror.

The proposed invention will bring several benefits, such as the novel functionality of translating components implementing the line of sight angular scanning, the smaller cross-section and flexibility and configurability regarding implementation. The latter is related to the option of compensating various optical aberrations with the translating components, so in fact the advantages are offered by the implementation.

The design is also capable of compensating for chromatic aberrations in case refractive components are used and even more compact packaging can be achieved, since the components are not in the way of each other.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. An optical system (1) for angular scanning of incident light (10), comprising:
• an optical sensor (12),
• a first displaceable optical component (14) capable of reflecting or refracting light, and
• a second displaceable optical component (16) capable of reflecting or refracting light;
wherein
• the first displaceable optical component (14) and the second displaceable optical component (16) are relatively translationally displaceable parallel to each other by one, or more, actuator(s) (22), such that the incident light (10) is deflected to form deflected light (11) in accordance with the translational displacement of the displaceable optical components (14, 16), and
• the optical sensor (12) is arranged to record the deflected light from multiple translational displacement positions (35) of the first and the second displaceable optical component.

2. The optical system (1) according to claim 1, wherein the first and/or the second displaceable optical components (14, 16) deflect the incident light (10), such that the incident light comprises an incoming angle (29) relative to the displaceable optical components (14, 16) in accordance with the translational displacement between the displaceable optical components.

3. The optical system according to claim 2, wherein the optical system (1) is arranged to record deflected light (11) of incident light (10) comprising different incoming angles (29) by displacing the first and/or the second displaceable optical components (14, 16) into translational displacement positions (35) with different translational displacement of the displaceable optical components.

4. The optical system according to any of the claims 1-3, wherein the incident light (10) first is reflected or refracted by the first displaceable optical component (14) and then reflected or refracted by the second displaceable optical component (16) before moving towards the optical sensor (12) as deflected light (11).

5. The optical system according to any of the claims 1-4, wherein the first and/or the second displaceable optical components (14, 16) are lenses, mirrors, meta-material components or meta-surface components.

6. The optical system according to any of the claims 1-5, wherein the first and/or the second displaceable optical components (14, 16) are refractive or reflective.

7. The optical system according to any of the claims 1-6, wherein the optical system (1) further comprises a focusing optical component (18), preferably a mirror, to focus the deflected light (11) from the first and/or the second displaceable optical components (14, 16) towards the optical sensor (12).

8. The optical system according to any of the claims 1-7, wherein the incident light (10) is collimated light.

9. The optical system according to claim 8, wherein, the deflected light (11) is collimated light.

10. The optical system according to any of the claims 1-9, wherein the one, or more, actuators (22) for translational displacing the first and/or the second displaceable optical components (14, 16) are linear actuators, piezoelectric actuators, or voice coil motors.

11. A satellite (30) comprising the optical system (1) according to any of the claims 1-10.

12. A method for angular scanning of incident light using an optical system, the method comprising:
• providing an optical system (1) comprising an optical sensor (12), a first displaceable optical component (14) capable of reflecting or refracting light and a second displaceable optical component (16) capable of reflecting or refracting light;
• translationally displacing the first and/or the second displaceable optical component (14, 16) parallel to each other to deflect the incident light (10) and form deflected light (11);
• recording the deflected light (11) at the optical sensor at multiple translational displacement positions (35) of the at least two displaceable optical components (14, 16); and
• combining the recordings (61) obtained at multiple translational displacement positions (35) to form a combined output (62, 63).

13. The method for angular scanning of incident light according to claim 12, wherein recording the deflected light (11) at the optical sensor (12) at multiple translational displacement positions (35) of the first and/or the second displaceable optical components (14, 16), comprises scanning along a field of view.

14. The method for angular scanning of incident light according to claim 12, wherein the optical system (1) is mounted on a satellite (30) in orbit, and the recording of the deflected light (11) by the optical sensor (12) at multiple translational displacement positions (35) of the first and/or the second displaceable optical component (14, 16) comprises recording the same spot on the Earth's surface from different incoming angles (29) as the satellite moves in its orbit.
